# EUROPÄISCHE PATENTSCHRIFT

(11) **EP 0 570 749 B1**
(45) Veröffentlichungstag und Bekanntmachung des Hinweises auf die Patenterteilung: **05.01.2000**
(21) Anmeldenummer: 93107130.2
(22) Anmeldetag: 03.05.1993
(51) Int. Cl.: H04Q 11/04, H04Q 3/62

(54) **Schaltungsanordnung zur Übertragung nachrichtentechnischer Signale**
Circuit arrangement for transmission of telecommunication signals
Circuit de transmission de signaux de télécommunication

(30) Priorität: 16.05.1992 DE 4216266
(43) Veröffentlichungstag der Anmeldung: 24.11.1993
(73) Patentinhaber: ALCATEL, 75008 Paris (FR)
(72) Erfinder: Still, Michael, W-3012 Langenhagen (DE); Fritz, Wolfgang, W-3000 Hannover 1 (DE); Niehoff, Jörg, W-3000 Hannover 81 (DE); Bratschke, Thomas, W-3000 Hannover 21 (DE)
(74) Vertreter: Döring, Roger, Dipl.-Ing.

(56) Entgegenhaltungen:
- US-A- 4 788 680
- US-A- 5 111 497
- AT&T BELL LABORATORIES TECHNICAL JOURNAL, Bd. 63, Nr. 10, 1.Dezember 1984, Seiten 2283-2331, XP002008539 LUNIEWICZ M M ET AL: "THE SLC 96 SUBSCRIBER LOOP CARRIER SYSTEM: CHANNEL BANK"

## Beschreibung

Die Erfindung bezieht sich auf eine Schaltungsanordnung zur Übertragung nachrichtentechnischer Signale zwischen mehreren Teilnehmern und einer Vermittlungsstelle eines Fernsprechnetzes in beiden Übertragungsrichtungen, in welcher den Teilnehmern einerseits und der Vermittlungsstelle andererseits jeweils Systemeinheiten mit einer analogen und einer digitalen Anschlußseite zugeordnet sind, zwischen denen die Signale unter Zwischenschaltung von Umsetzern als digitale Signale über eine Zweidrahtleitung übertragen werden, wobei die Datenrate der Signale in den Umsetzem jeweils durch Umkodierung am einen Ende der Zweidrahtleitung reduziert und am anderen Ende derselben wieder erhöht wird, und in welcher sowohl auf der Seite der Teilnehmer als auch auf der Seite der Vermittlungsstelle analoge Schnittstellen zur Verfügung stehen (Technische Information "PCM4A-System" der ke Kommunikations-Elektronik GmbH & Co, Hannover, 07/91).

Ein derartiges Verfahren wird zur besseren Ausnutzung von Kupferleitungen bestehender Kabelanlagen verwendet.

Aus der US-A-5 111 497 geht ein Übertragungsverfahren für Sprachsignale und Daten hervor, bei dem über eine Zweidrahtleitung beispielsweise im System ISDN 2B1Q zwei Sprachkanäle zu je 64 kbit/s und ein Datenkanal von 16 kbit/s zwischen einer Vermittlungsstelle und Teilnehmern übertragen werden. Die digitalen Signale bzw. Daten werden an den Enden der Zweidrahtleitung aus analogen Signalen bzw. Daten gebildet bzw. wieder in analoge Signale bzw. Daten umgesetzt. Die Patentschrift beschreibt im wesentlichen die Anwendung des Verfahrens für interne Testzwecke.

Bei dem bekannten Verfahren nach der im Vorangehenden beschriebenen Technischen Information sind vier Teilnehmer mit ihren Telefonen unter Zwischenschaltung der Systemeinheiten an nur eine Zweidrahtleitung angeschlossen. Die Übertragung der Signale erfolgt nach Digitalisierung zwischen einer Vermittlungsstelle und den Teilnehmern mit einer Übertragungsrate von 144 kbit/s als Nutzbitrate. Die digitalisierten Sprachkanäle werden zwischen den Teilnehmern und der Vermittlungsstelle bzw. umgekehrt jeweils nach Umcodierung in vier Kanälen von je 32 kbit/s über die Zweidrahtleitung übertragen. Der verbleibende, sogenannte D-Kanal mit 16 kbit/s wird für Steuerzwecke eingesetzt. Statt der Telefone können bei den Teilnehmern auch Modems und Telefax-Geräte angeschlossen werden. Das entsprechende System ist mit PCM4A bezeichnet, weil an den Systemeinheiten auf der Anschlußseite der Teilnehmer und auf der Seite der Vermittlungsstelle vier analoge Schnittstellen zur Verfügung gestellt werden. Die Buchstaben "PCM" stehen für das bekannte Verfahren der Puls-Code-Modulation.

Der Erfindung liegt die Aufgabe zugrunde, die eingangs beschriebene Schaltungsanordnung so weiterzubilden, daß bei gleichbleibender Übertragungsrate mehr als vier Teilnehmer mit dem Fernsprechnetz verbunden werden können, ohne daß die Qualität der Übertragung negativ beeinflußt wird.

Diese Aufgabe wird gemäß der Erfindung dadurch gelöst,
- daß für jeden der ohne feste Zuordnung eines Übertragungskanals angeschlossenen Teilnehmer sowohl auf der Teilnehmerseite als auch auf der Seite der Vermittlungsstelle eine Systemeinheit vorgesehen ist, deren analoge Anschlußseite jeweils mit einem Teilnehmer bzw. mit einem diesem Teilnehmer in der Vermittlungsstelle zugeordneten Wähler verbunden ist,
- daß alle Systemeinheiten mit ihren digitalen Anschlußseiten jeweils an einen bei den Teilnehmern einerseits und bei der Vermittlungsstelle andererseits angeordneten Multiplexer angeschlossen sind,
- daß an die Multiplexer jeweils die über die Zweidrahtleitung miteinander verbundenen Umsetzer angeschlossen sind,
- daß jeder Multiplexer mit einer intelligenten Steuereinheit zur wahlweisen Zuordnung und Durchschaltung von freien Übertragungskanälen zwischen den Teilnehmern und der Vermittlungsstelle verbunden ist und
- daß die beiden Steuereinheiten miteinander über die Umsetzer und die Zweidrahtleitung verbunden sind.

Mit dieser Schaltungsanordnung werden die Übertragungswege den Teilnehmern durch die Steuereinheiten zugeordnet. Es ist keinem Teilnehmer ein Sprachkanal fest zugeordnet, sondern die Teilnehmer sind wahlweise unter Vermittlung der Multiplexer mit der Vermittlungsstelle verbindbar. Mit der Annahme, daß nicht mehr als vier Teilnehmer gleichzeitig telefonieren, werden dieselben in der Reihenfolge durchverbunden, in der sie durch Abheben des Telefonhörers selbst telefonieren wollen oder über das Fernsprechnetz angerufen werden. Es werden unverändert maximal vier Sprachkanäle mit beispielsweise 32 kbit/s übertragen, so daß für alle Gespräche die Übertragungsqualität des PCM4A-Systems erhalten bleibt. Die beiden Steuereinheiten können ihre gegenseitigen Informationen darüber, welcher Übertragungsweg durchgeschaltet bzw. durchzuschalten ist, über den D-Kanal austauschen.

Vorteilhafte Ausgestaltungen der Erfindung gehen aus den Unteransprüchen hervor.

Ausführungsbeispiele des Erfindungsgegenstandes sind in den Zeichnungen dargestellt.

Es zeigen:
Fig. 1 eine Schaltungsanordnung nach der Erfindung in schematischer Darstellung als Blockschaltbild.
Fig. 2 eine gegenüber Fig. 1 abgewandelte Schaltungsanordnung.

Die Zeichnungen geben die Anwendung der Schaltungsanordnung nach der Erfindung für acht Teilnehmer wieder. Es sollen mindestens fünf Teilnehmer sein.

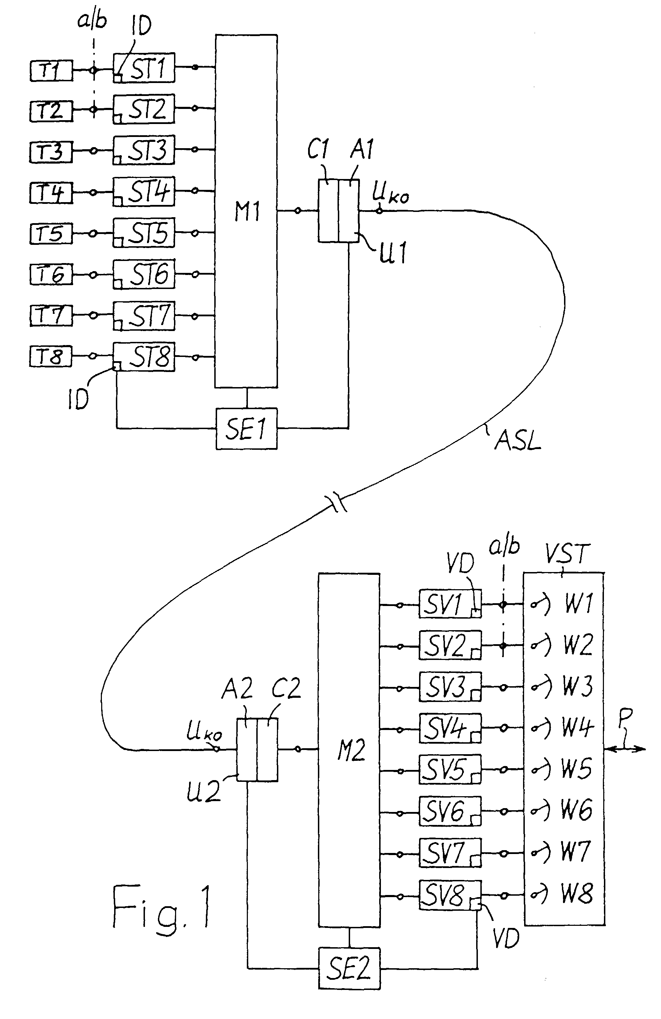

Jeder Teilnehmer T1 bis T8 ist mit seinen analogen Geräten (Telefon oder Telefax) mit einer der Systemeinheiten ST1 bis ST8 verbunden, und zwar mit der durch a/b gekennzeichneten analogen Anschlußseite derselben. Alle Systemeinheiten ST1 bis ST8 sind gemäß Fig. 1 mit ihren digitalen Anschlußseiten an einen Multiplexer M1 angeschlossen. Der Multiplexer M1 ist mit einem Umsetzer U1 verbunden, von dessen digitaler U_{KO}-Schnittstelle eine Zweidrahtleitung ASL zu einem Umsetzer U2 einer Vermittlungsstelle VST führt. Der Umsetzer U2 ist mit einem Multiplexer M2 verbunden, an dessen acht digitalen Anschlüssen acht Systemeinheiten SV1 bis SV8 mit ihren digitalen Anschlußseiten angeschlossen sind. Die wieder mit a/b gekennzeichneten analogen Anschlußseiten der Systemeinheiten SV1 bis SV8 sind mit Wählern W1 bis W8 verbunden, die in der Vermittlungsstelle VST angeordnet sind. Jeder der Wähler W1 bis W8 ist einem der Teilnehmer T1 bis T8 zugeordnet.

Die Umsetzer U1 und U2 haben i. w. zwei Funktionen. Sie sind daher in Fig. 1 durch einen Strich in zwei Teile geteilt. In der einen Funktion C1 bzw. C2 wird die Datenrate der Signale reduziert bzw. erhöht. Die dabei stattfindende Umcodierung kann beispielsweise mit dem bekannten ADPCM-Verfahren durchgeführt werden. So kann beispielsweise ein vom Multiplexer M1 kommender Sprachkanal mit 64 kbit/s durch die Funktion C1 des Umsetzers U1 in einen Sprachkanal mit 32 kbit/s umcodiert werden. Die Umcodierung durch die Funktion C2 des Umsetzers U2 erfolgt in umgekehrter Richtung. Das gilt umgekehrt auch für die andere Übertragungsrichtung. In ihrer anderen Funktion A1 bzw. A2 werden durch die Umsetzer U1 und U2 die von den Funktionen C1 bzw. C2 kommenden bzw. zu denselben zu übertragenden Signale bzw. Datenströme in für die Übertragung auf der Zweidrahtleitung ASL geeignete Werte umgesetzt bzw. umgekehrt.

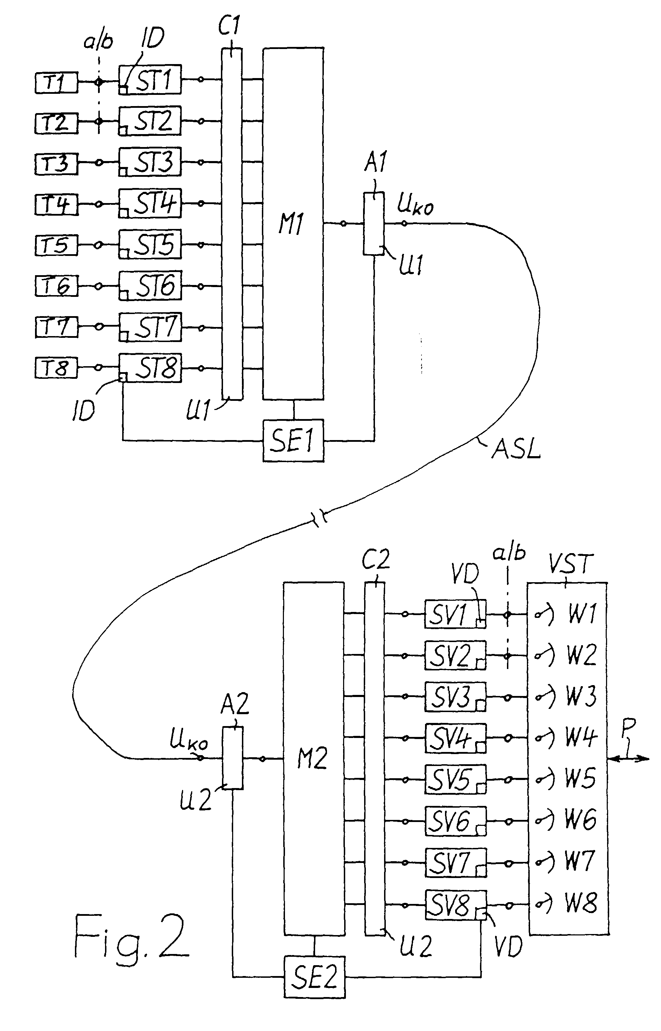

Die Funktion C1 bzw. C2 der Umsetzer U1 bzw. U2 kann gemäß Fig. 2 auch zwischen die Systemeinheiten ST1 bis ST8 und den Multiplexer M1 sowie zwischen die Systemeinheiten SV1 bis SV8 und den Multiplexer M2 gelegt werden. Die Funktionen A1 und A2 bleiben davon unberührt.

In jeder Systemeinheit ST1 bis ST8 der Teilnehmerseite ist ein Stromdetektor ID angeordnet, während sich in jeder Systemeinheit SV1 bis SV8 auf der Seite der Vermittlungsstelle VST ein Spannungsdetektor VD befindet. Alle Stromdetektoren ID sind mit einer intelligenten Steuereinheit SE1 verbunden, die an den Multiplexer M1 angeschlossen ist. An die mit dem Multiplexer M2 verbundene, intelligente Steuereinheit SE2 sind alle Spannungsdetektoren VD angeschlossen. Die Verbindung ist jeweils nur für eines der Bauteile ID und VD eingezeichnet. Die Steuereinheiten SE1 und SE2 sind über die Funktionen A1 und A2 der Umsetzer U1 und U2 sowie die Zweidrahtleitung ASL miteinander verbunden. Ein Informationsaustausch zwischen den beiden Steuereinheiten SE1 und SE2 ist beispielsweise über den D-Kanal möglich.

Die Multiplexer M1 und M2 sind an sich bekannte Bauteile zur Verschachtelung von digitalen Übertragungskanälen im Zeitmultiplexverfahren. Sie sind im vorliegenden Fall mit acht Multiplexerstufen ausgerüstet. Als intelligente Steuereinheiten SE1 und SE2 können beispielsweise Mikrokontroller oder Gatearrays eingesetzt werden.

Die Schaltungsanordnung nach der Erfindung arbeitet gemäß Fig. 1 beispielsweise wie folgt:

Es wird von einer Situation ausgegangen, in der keiner der Teilnehmer T1 bis T8 telefoniert. Der Teilnehmer T1 will jetzt telefonieren. Er hebt dazu den Hörer von seinem Telefon ab. Der Stromdetektor ID seiner Systemeinheit ST1 registriert den jetzt fließenden Schleifenstrom und gibt eine entsprechende digitale Information an die Steuereinheit SE1. Diese gibt ein Steuersignal an den Multiplexer M1, welcher dem Teilnehmer T1 einen freien Sprachkanal zuordnet. Dem Teilnehmer T1 wird dadurch ein Sprachkanal mit beispielsweise 64 kbit/s zugewiesen, der an der digitalen Anschlußseite der Systemeinheit ST1 zur Verfügung steht und vom Multiplexer M1 durchgeschaltet wird. Der 64 kbit/s-Sprachkanal wird vom Umsetzer U1 in einen 32 kbit/s-Sprachkanal umgesetzt und über die Zweidrahtleitung ASL zum Umsetzer U2 übertragen. Dort wird der 32 kbit/s-Sprachkanal wieder in einen 64 kbit/s-Sprachkanal umgesetzt und vom Multiplexer M2 der Systemeinheit SV1 zugeleitet. Über den Wähler W1 ist der Teilnehmer T1 dann mit dem an die Vermittlungsstelle VST angeschlossenen Fernmeldenetz verbunden, das durch den Doppelpfeil P angedeutet ist. Damit der Multiplexer M2 den ankommenden Sprachkanal auf die richtige Systemeinheit bzw. den richtigen Wähler durchschaltet, erhält die Steuereinheit SE2 über den D-Kanal von der Steuereinheit SE1 die entsprechende Information.

Die Durchschaltung des Übertragungswegs für den Fall, daß der Teilnehmer T1 angerufen wird, geschieht analog zu dem geschilderten Ablauf. Der am Wähler W1 ankommende Ruf wird vom Spannungsdetektor VD der Systemeinheit SV1 registriert. Die Steuereinheit SE2 erhält eine entsprechende digitale Information. Sie steuert den Multiplexer M2 an und informiert die Steuereinheit SE1. Von dieser wird der Multiplexer M1 angesteuert. Die Umsetzer U1 und U2 arbeiten analog zur obigen Beschreibung.

Wenn in der Zeit, in welcher der Teilnehmer T1 telefoniert, beispielsweise auch der Teilnehmer T3 telefonieren will, dann wird ihm analog zu dem für den Teilnehmer T1 geschilderten Ablauf ein weiterer Sprachkanal mit einer Übertragungsrate von 32 kbit/s an der U_{KO}-Schnittstelle über einen noch freien Sprachkanal zugeordnet. Dem nächsten Teilnehmer, der telefonieren möchte, wird - wenn die beiden Teilnehmer T1 und T3 noch telefonieren - ein dritter freier Sprachkanal zugeordnet. Für den 4. Teilnehmer bleibt - sofern die anderen drei Teilnehmer noch telefonieren - dann der 4. freie Sprachkanal. Solange diese vier Teilnehmer oder auch andere vier Teilnehmer telefonieren, können weitere Teilnehmer nicht mit der Vermittlungsstelle VST verbunden werden und sie sind auch nicht aus dem Fernmeldenetz erreichbar. Dieser Fall wird unter normalen Bedingungen aber nicht eintreten. Das gilt insbesondere dann, wenn die Teilnehmer T1 bis T8 danach ausgesucht sind, wie oft und wie lange sie im Durchschnitt telefonieren.

Die Steuereinheiten SE1 und SE2 registrieren über die Stromdetektoren ID bzw. die Spannungsdetektoren VD, wenn einer der Teilnehmer sein Telefongespräch beendet hat. Der entsprechende Übertragungsweg ist dann wieder frei. Er kann für den nächsten Teilnehmer durchgeschaltet werden, der telefonieren will oder angerufen wird.

Die im Vorangehenden für das Telefon bzw. das Telefonieren gegebenen Erläuterungen gelten unverändert auch für den Fall, daß die Teilnehmer T1 bis T8 Modems oder Telefaxgeräte betreiben.

## Patentansprüche

1. Schaltungsanordnung zur Übertragung nachrichtentechnischer Signale zwischen mehreren Teilnehmern (T1-T8) und einer Vermittlungsstelle (VST) eines Femsprechnetzes in beiden Übertragungsrichtungen, in welcher den Teilnehmern (T1-T8) einerseits und der Vermittlungsstelle (VST) andererseits jeweils Systemeinheiten (ST,SV) mit einer analogen und einer digitalen Anschlußseite zugeordnet sind, zwischen denen die Signale unter Zwischenschaltung von Umsetzern (U1,U2) als digitale Signale über eine Zweidrahtleitung (ASL) übertragen werden, wobei die Umsetzer derart ausgestaltet sind, daß die Datenrate der Signale in den Umsetzern (U1,U2) jeweils durch Umcodierung am einen Ende der Zweidrahtleitung (ASL) reduziert und am anderen Ende derselben wieder erhöht wird, und in welcher sowohl auf der Seite der Teilnehmer (T1-T8) als auch auf der Seite der Vermittlungsstelle (VST) analoge Schnittstellen zur Verfügung stehen, dadurch gekennzeichnet,
- daß für jeden der ohne feste Zuordnung eines Übertragungskanals angeschlossenen Teilnehmer (T1-T8) sowohl auf der Teilnehmerseite als auch auf der Seite der Vermittlungsstelle (VST) eine Systemeinheit (ST1-ST8, SV1-SV8) vorgesehen ist, deren analoge Anschlußseite jeweils mit einem Teilnehmer (T1-T8) bzw. mit einem diesem Teilnehmer in der Vermittlungsstelle (VST) zugeordneten Wähler (W1-W8) verbunden ist,
- daß alle Systemeinheiten (ST1-ST8, SV1-SV8) mit ihren digitalen Anschlußseiten an einen bei den Teilnehmern (T1-T8) einerseits und bei der Vermittlungsstelle (VST) andererseits angeordneten Multiplexer (M1,M2) angeschlossen sind,
- daß an die Multiplexer (M1,M2) jeweils die über die Zweidrahtleitung (ASL) miteinander verbundenen Umsetzer (U1,U2) angeschlossen sind,
- daß jeder Multiplexer (M1,M2) mit einer intelligenten Steuereinheit (SE1,SE2) zur wahlweisen Zuordnung und Durchschaltung von freien Übertragungskanälen zwischen den Teilnehmern (T1-T8) und der Vermittlungsstelle (VST) verbunden ist und
- daß die beiden Steuereinheiten (SE1,SE2) miteinander über die Umsetzer (U1,U2) und die Zweidrahtleitung (ASL) verbunden sind.

2. Schaltungsanordnung nach Anspruch 1, dadurch gekennzeichnet, daß acht Teilnehmer (T1-T8) angeschlossen sind.

3. Schaltungsanordnung nach Anspruch 1 oder 2, dadurch gekennzeichnet,
- daß in jeder Systemeinheit (ST1-ST8) auf der Teilnehmerseite ein Stromdetektor (ID) und in jeder Systemeinheit (SV1-SV8) auf der Seite der Vermittlungsstelle (VST) ein Spannungsdetektor (VD) angeordnet ist und
- daß alle Stromdetektoren (ID) und alle Spannungsdetektoren (VD) mit der zugehörigen Steuereinheit (SE1,SE2) verbunden sind.

## Claims

1. Circuit arrangement for the transfer of technical. communications signals between several subscribers (T1-T8) and a switching centre (VST) of a telephone network in both transmission directions, in which system units (ST, SV) with an analog and a digital connection side are allocated to the subscribers (T1-T8) on the one hand, and the switching centre (VST) on the other, between which the signals are transferred, with the intermediate connection of converters (U1, U2), in the form of digital signals, via a two-wire line (ASL), in which situation the converter units are equipped in such a way that the data rate of the signals in the converters (U1, U2) in each case is reduced by recoding at one end of the two-wire line (ASL) and is raised again at the other end of the line, and in which analog interfaces are provided on the subscriber side (T1-T8) as well as on the switching centre side (VST), characterised in that:
- a system unit (ST1-ST8, SV1-SV8) is provided for each of the subscribers (T1-T8) connected without the fixed allocation of a transmission channel, both on the subscriber side as well as on the switching centre (VST) side, the analog connection side of the said system units being connected in each case to a subscriber (T1-T8) or to a selector (W1-W8) allocated to one of these subscribers in the switching centre (VST);
- all the system units (ST1-ST8, SV1-SV8) are connected on their digital connection sides to a multiplexer (M1, M2), arranged on the one hand at the subscribers (T1-T8) and at the switching centre (VST) on the other;
- converters (U1, U2), in each case connected to one another by the two-wire line (ASL), are connected to the multiplexers (M1, M2);
- each multiplexer (M1, M2) is connected to an intelligent control unit (SE1, SE2) for the optional allocation and switching through of free transmission channels between the subscribers (T1-T8) and the switching centre (VST);
- the two control units (SE1, SE2) are connected to each other via the converters (U1, U2) and the two-wire line (ASL).

2. Circuit arrangement according to Claim 1, characterised in that eight subscribers (T1-T8) are connected.

3. Circuit arrangement according to Claims 1 or 2,
characterised in that:
- in each system unit (ST1-ST8) a current detector (ID) is arranged on the subscriber side, and a voltage detector (VD) in each system unit (SV1-SV8) on the switching centre (VST) side, and
- all the current detectors (ID) and all the voltage detectors (VD) are connected to the pertinent control unit (SE1, SE2).

## Revendications

1. Dispositif de commutation destiné au transfert de signaux techniques de communication entre plusieurs participants (T1-T8) et un central de communication (VST) vers le réseaux externe dans les deux sens de transfert, et où les participants (T1-T8) d'une part et le central de communication (VST) d'autre part sont raccordés respectivement par une ligne analogique et une ligne numérique aux unités de système (ST, SV) entre lesquelles le transfert est réalisé par des signaux numériques par l'intermédiaire d'une ligne à deux conducteurs (ASL) et d'un raccordement intermédiaire sur des convertisseurs (U1, U2), ces convertisseurs sont équipés de telle sorte que le taux de bits de transfert des signaux dans les convertisseurs (U1, U2) est respectivement ralenti à une extrémité de la ligne à deux conducteurs (ASL) par transcodage et de nouveau accéléré à l'autre extrémité de la ligne, et ce dispositif comporte également une interface analogique côté participants (T1, T8) et une autre côté central de communication (VST), le dispositif est caractérisé par le fait que
- pour chaque participant connecté (T1, T8), aussi bien du côté participant que du côté central de communication (VST), un canal de communication est réservé sans prédétermination fixe sur les unités de système (ST1-ST8, SV1-SV8) dont la ligne de raccordement analogique est occupée par un des participants (T1-T8) ou par un des participants connectés à un appel externe (W1-W8) par l'intermédiaire du central de communication (VST),
- toutes les unités de système (ST1-ST8, SV1-SV8) sont reliées côté raccordement numérique à l'un des participants (T1-T8) et de l'autre côté au central de communication (VST) par l'intermédiaire des multi-plexeurs (M1-M2) respectifs,
- les multiplexeurs (M1, M2) sont reliés respectivement aux convertisseurs (U1, U2) par l'intermédiaire de la ligne à deux conducteurs (ASL),
- chaque multiplexeur (M1, M2) est relié respectivement à une unité de commande intelligente (SE1, SE2) qui effectue suivant les cas, l'attribution ou la commutation des canaux de transfert entre les participants (T1-T8) et le central de communication (VST), et que
- les deux unités de commande (SE1, SE2) sont reliées entre elles par l'intermédiaire des convertisseurs (U1, U2) et de la ligne (ASL) à deux conducteurs.

2. Dispositif de commutation suivant l'objet d'invention 1, caractérisé par le fait que huit participants (T1-T8) sont connectés au système.

3. Dispositif de commutation suivant l'objet d'invention 1 ou 2, caractérisé par le fait que chaque
- unité de système (ST1-ST8) est équipée côté participants d'un détecteur de courant (ID), et que chaque unité système (SV1-SV8) est équipée d'un détecteur de tension côté (VD) central de communication, et que
- tous les détecteurs de courant (ID) et tous les détecteurs de tension (VD) sont reliés à l'unité de commande correspondante (SE1, SE2).
